# EUROPEAN PATENT APPLICATION

(11) **EP 4 461 397 A1**
(43) Date of publication of application: **13.11.2024**
(21) Application number: 24174709.6
(22) Date of filing: 08.05.2024
(51) Int. Cl.: B01D 37/04, B01D 35/18, B01D 35/31

(54) **FILTER FOR FLUIDIC APPLICATIONS**

(30) Priority: 11.05.2023 LU 103123
(71) Applicant: Stratec SE, 75217 Birkenfeld (DE)
(72) Inventor: Kashef, Jubin, 75217 Birkenfeld (DE)
(74) Representative: Tegethoff, Sebastian

(57) **Abstract**

The present disclosure provides a fluidic system, comprising a pressure sensor which is arranged between a pump for moving a fluid in a fluid path and a heatable filter. Another object of the present disclosure relates to a method for moving of a fluid in a fluid path of a fluidic system, comprising the steps of: providing the fluid to the fluidic path; moving the fluid in a defined direction with a pump; sensing the pressure in the fluidic path with a pressure sensor which is arranged downstream of the pump; heating the fluid in the fluidic path in a heatable filter which is arranged downstream of the pressure senor; providing the filtered fluid downstream of the heatable filter.

## Description

### Field of the Disclosure

The disclosure relates to a filter for fluidic applications.

### Brief description of the related art

Devices for use in clinical diagnostics and life sciences are produced by a number of companies. For example, STRATEC' SE, Germany, manufactures numerous devices for diagnostic specimen handling and detection for use in automated analyser systems and other laboratory instrumentation.

In vitro human diagnostic analyser systems can process samples derived from the human body, including blood, saliva, urine, and tissue donations, to the point of providing important information (1) about physiological or pathological conditions, (2) about genetic abnormalities, (3) for testing for compatibility of blood donations in potential recipients, or (4) for monitoring therapeutic interventions.

To process the above-mentioned and very different samples, a variety of assays and associated reagents are needed, which can differ significantly in their chemical structure and thus in their physical properties. Many reagents are buffer solutions (with or without added surfactants) or contain fluorescent or organic dyes. Often these reagents have an unfavourable solubility product, so that precipitated molecules or crystals or even suspended solids in different sizes and shapes are present in the reagent liquid. These macromolecules can in turn inhibit individual assay sub-reactions and thus falsify the final assay results.

In the design of analytical systems, this risk of a false negative result in the worst case is mitigated, among other things, by installing filters in the fluidic path. Filters of different volume, material and pore size are used to generate the optimum conditions specifically for each reagent. Depending on the environmental conditions and the physical properties of the reagent in question, filters can become clogged very quickly by precipitates. The clogging of a filter increases the flow resistance in the system and will thus significantly affect the performance of the analytical system. Such analyser systems can no longer be used in the laboratory until a service technician replaces the filter on site, which in turn involves very high costs due to the downtime of the system and deployment by the service technician.

Published European patent application EP 2 223 737 A1 discloses an autonomous filter device and a method for improving the filter life and performance. The filter element is equipped with one or more sensors, adapted to measure one or more characteristics or parameters of the fluid, such as temperature, pressure, or flow rate. In response to the measured characteristic or parameter, the control logic within the filter element is able to determine an appropriate response. For example, the control logic may determine that a sudden, but temporary, blockage has occurred in the filter membrane. In response to this, the control logic may initiate a specific response designed to alleviate the blockage. This response may be a temperature change, a vibration, a change in fluid flow path, or some other action. The control logic will then determine the success of the response, based monitoring any change in the fluid characteristics. Based thereon, the control logic may alert the operator that the filter element must be replaced. Alternatively, if the response was successful in correcting the blockage, the control logic need not notify the operator, as the filter element is back to normal operating operation.

Published European patent application EP 1 063 414 A2 discloses an apparatus for conditioning of a fluid. In one embodiment, there is an apparatus which comprises two filters and an electrically actuatable switching valve. Fluid provided to the apparatus may be routed to either filter by the switching valve. A controller positions the valve to provide fluid to a particular filter based on a measurement of pressure downstream of the filter, provided that the temperature of the fluid is above a predetermined level. Further, the disclosure includes proximity switches by which the controller can determine the coupling or uncoupling of a filter from the body. Various fuel heaters are provided for heating the fuel.

Published Korean patent application KR 2004 0082360 A discloses a water purifier that can supply different temperature water according to user's need is provided to improve thermal efficiency, secure safety and obtain convenience effect by supplying hot water having temperature desired by users. The water purifier comprises a hot water tank that is first heating means, and second heater for secondly heating water that is primarily heated in the hot water tank, wherein the second heater comprises a heater installed on the main body of the second heater to heat the main body, a main body for transferring the absorbed heat to water in the heating pipe by absorbing heat generated from the heater, a heating pipe which is installed in the main body as a water passageway, and in which water is heated by receiving heat from the main body, and a bimetal contacted with the outer wall surface of the main body and the hot water tank to short-circuit supply of power into the heater during overheating of the main body, wherein the second heater further comprises an outlet water temperature sensor installed on an outer part of the main body to transmit the sensed temperature values to a control part by sensing temperature of outlet water.

Thus, there is a need for a method and device avoiding the disadvantages from solutions known from the prior art.

### Summary of the Disclosure

The present disclosure provides a fluidic system, comprising a pressure sensor which is arranged between a pump for moving a fluid in a fluid path and a filter comprising a heating element.

Another aspect of the system of the present disclosure relates to an embodiment comprising a plurality of parallel arranged filters.

The filter or each filter of the plurality of filters comprises in an embodiment a temperature sensor which is electrically connected to a controller for controlling the temperature of the respective filter by adjusting the heating element to a defined temperature.

In another embodiment of the system according to the disclosure, the filter or each filter of the plurality of filters may comprise a heatable foil for heating.

It is further intended that the controller comprises stored data of the solubility of reagents which serves as set points for heating of the heating elements of the filter or each filter of the plurality of filters.

The system according to the present disclosure may comprise a vibrating actuator which is attached to the filter or each filter of the plurality of filters.

It is further envisaged that the pressure sensor is connected to the controller for transmitting measured pressures, and wherein the controller is connected to the pump for stopping the fluid flow in case of a measured pressure above a defined threshold.

In a system according to the present disclosure, at least the filter can be insulated.

Another object of the present disclosure relates to a method for moving of a fluid in a fluid path of a fluidic system, comprising the steps of:
- Providing the fluid to the fluidic path;
- Moving the fluid in a defined direction with a pump;
- Sensing the pressure in the fluidic path with a pressure sensor which is arranged downstream of the pump;
- Heating the fluid in the fluidic path in a filter comprising heating elements which is arranged downstream of the pressure senor;
- Providing the filtered fluid downstream of the heatable filter.

The method may further comprise the stap that the fluid is heated in the filter by a heatable foil.

The method may comprise a temperature sensor of the filter which is connected to a controller for measuring the temperature in the filter.

In an embodiment, the method comprises the step of using the heating elements of the filter which are connected to the controller for adjusting the filter to a defined temperature depending on the measured temperature in the filter.

It is also intended that the defined temperature is adjusted to the solubility of the fluid in the fluidic path.

The controller may comprise a set of data comprising the solubility of fluids and uses the set of data for adjusting the temperature of the filter to the solubility of the fluid present in the fluidic path.

The method may comprise the step of stopping the pump which is connected to the controller, when the pressure sensor which is connected to the controller transmits data of a pressure in the fluidic path exceeding or falling below a defined threshold.

Still other aspects, features, and advantages of the present disclosure are readily apparent from the following detailed description, simply by illustrating preferable embodiments and implementations. The present disclosure is also capable of other and different embodiments and its several details can be modified in various obvious respects, all without departing from the spirit and scope of the present disclosure. Accordingly, the drawings and descriptions are to be regarded as illustrative in nature, and not as restrictive. Additional objects and advantages of the disclosure will be set forth in part in the description which follows and in part will be obvious from the description, or may be learned by practice of the disclosure.

### Summary of the Figures

The disclosure will be described based on figures. It will be understood that the embodiments and aspects of the disclosure described in the figures are only examples and do not limit the protective scope of the claims in any way. The disclosure is defined by the claims and their equivalents. It will be understood that features of one aspect or embodiment of the disclosure can be combined with a feature of a different aspect or aspects of other embodiments of the disclosure, in which:
FIG. 1 shows a fluidic path of a fluidic system according to the present disclosure.
FIG. 2 shows two embodiments of a fluidic path of a fluidic system according to the present disclosure comprising parallel installed filters: A: Two parallel filters with a single pressure sensor arranged upstream; B: Two parallel filters with a pressure sensor arranged upstream of each filter.
FIG. 3 shows a fluidic path of a fluidic system according to the present disclosure comprising an insulated filter.

### Detailed Description of the Disclosure and the Figures

The technical problem is solved by the independent claims. The dependent claims cover further specific embodiments of the disclosure.

A fluid within the meaning of the present disclosure relates to a liquid, a gas or a mixture thereof that is capable of flowing, wherein the fluid may comprise solids like particles.

The solubility of a fluid like a reagent depends primarily on its solution enthalpy and thus on the temperature. In the case of a positive solution enthalpy (endothermic solution reaction), the solubility of a fluid increases when the temperature rises, whereas in the case of an exothermic solution reaction, the solubility of a fluid decreases when heated. Many of the reagents used in *in vitro* diagnostics have a positive enthalpy of solution. The present disclosure therefore proposes a filter comprising a heating element. Said filters will be designated as heatable filters within the meaning of the present disclosure. Thus, heating the filter by a heating foil as heating element for example and additional an optional appropriate insulation of the filter can significantly slow down or even completely prevent the formation of precipitates. The dissolution of precipitates, which have formed e.g. after a longer standing time, can additionally be accelerated by increasing the hydration. This is achieved by whirling up the reagent either by means of a vibrating actuator attached to the filter assembly or by using a pump (e.g. gear pump) which can circulate the reagent in the filter.

The prior art does not provide systems with a heatable filter, which leads to a lower reliability of analyser system from the prior art. The problem of clogged filters by precipitates on fluidic paths of analyser systems is known for a long time but a heatable filter has so far not been proposed for increasing the reliability of an analyser system comprising a fluidic path.

Using a heatable filter in combination with a pressure sensor upstream of the heatable filter, increases the reduction in the time intervals between maintenance operations, which in turn reduces the related high service costs. The implementation of a pressure sensor upstream of the heatable filter for predicting the clogging of the filter in advance is also not used in analyser systems known from the prior art. When a defined threshold value is reached, the system can warn the user in good time so that the filter can be replaced before the system fails. Thus, a built-in pressure sensor upstream of the heatable filter which can identify in good time a possible clogging of the filter over a longer period of time and can assist in predicting the failure of the analyser system in the laboratory.

Heatable filter, respectively a heatable foil, and the pressure sensor can be connected to a controller which is computer programable unit (CPU). The CPU is configured to receive signals from the pressure sensor and to send signals for controlling the heating of the filter by a heating foil for instance.

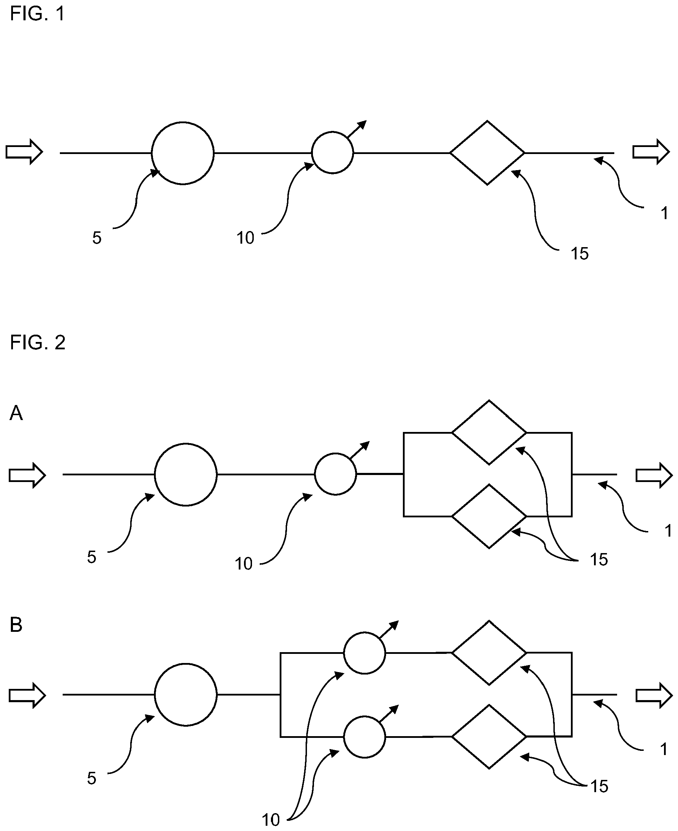

FIG. 1 schematically shows a section of the fluidic path 1 of a fluidic system comprising the heatable filter 15 which is arranged downstream of a pressure sensor 10 which is arranged downstream of a pump 5 in the fluid path 1 of a fluidic system. The arrows indicate the flow direction of a fluid in the fluidic path 1.

FIG. 2 shows two embodiments of a fluidic path 1 of a fluidic system according to the present disclosure comprising parallel installed filters 15: A: Two parallel filters 15 with a single pressure sensor 10 arranged upstream; B: Two parallel filters 15 with a pressure sensor 10 arranged upstream of each filter 15. The pump 5 is arranged upstream of pressure sensors 10 in FIG. 2A and FIG. 2B. The advantage of using parallel installed filters is that the load of particles which cannot pass the filter is distributed to the plurality of filters. Thus, the lifetime of the parallel working filters is likely higher that the lifetime of a single filter.

A heatable filter according to the present disclosure may comprise for heating a heating foil which is attached to match the size of the respective filter. The heating foil can be regulated to the temperature required for the respective reagent which is present in the fluidic path of the analyser system. This significantly slows down or even completely prevents the formation of precipitates.

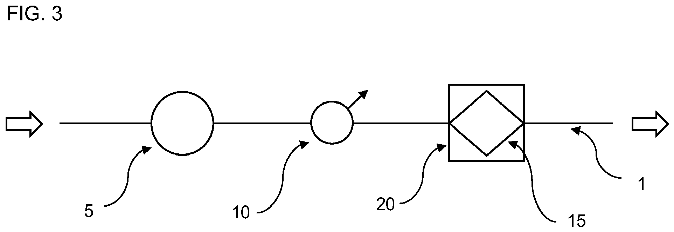

Additional insulation around the filter/heating foil assembly can be made of a flexible thermal insulation material, so that the temperature will be kept stable at the required level. FIG. 3 shows an embodiment of a fluidic path 1 of a fluidic system according to the present disclosure comprising a pump 5 which is arranged upstream of pressure sensor 10 which is arranged upstream of filter 15 with insulation 20. The required energy input will also be reduced. It is also advantageous to facilitate the dissolution of precipitates that have formed, e.g., after a longer standing time, which means that it is necessary to increase the hydration of the respective reagent. This is achieved by swirling the reagent either by a vibrating actuator attached to the filter assembly or by using a pump which is suitable to move the reagent in the filter, like a gear pump.

An alternative approach to the heatable filter for significantly slowing down or even completely preventing the formation of precipitates would be to heat other areas of the fluidic pathway beginning with the reagent bottle and ending with the individual tubes. However, such an alternative approach would involve increased costs and possible design changes.

In summary, the implementation of a heatable filter and the other measures mentioned above can significantly increase the reliability as well as the time intervals between maintenance visits of an analyser system equipped with a filter and thus save greater service costs.

The advantages of the disclosure relate to the implementation of a heatable filter which significantly increases the reliability as well as the time intervals between maintenance operations of an analyser system equipped with a filter. In addition, with the help of a built-in pressure sensor, the possible clogging of the filter can be identified in advance and therefore a sudden failure of the analyser system can be prevented. This means that greater service costs can be saved.

The foregoing description of the preferred embodiment of the disclosure has been presented for purposes of illustration and description. It is not intended to be exhaustive or to limit the disclosure to the precise form disclosed, and modifications and variations are possible in light of the above teachings or may be acquired from practice of the disclosure. The embodiment was chosen and described in order to explain the principles of the disclosure and its practical application to enable one skilled in the art to utilize the disclosure in various embodiments as are suited to the particular use contemplated. It is intended that the scope of the disclosure be defined by the claims appended hereto, and their equivalents. The entirety of each of the aforementioned documents is incorporated by reference herein.

### Reference Numerals

- 1: fluidic path
- 5: pump
- 10: pressure sensor
- 15: filter
- 20: insulation

## Claims

1. A fluidic system, comprising a pressure sensor which is arranged between a pump for moving a fluid in a fluid path and a filter comprising a heating element.

2. The system of any one of claims 1, wherein the system comprises a plurality of parallel arranged filters.

3. The fluidic system of claim 1 or 2, wherein the filter or each filter of the plurality of filters comprises a temperature sensor which is electrically connected to a controller for controlling the temperature of the respective filter by adjusting the heating element to a defined temperature.

4. The system of any one of claims 1 to 3, wherein the filter or each filter of the plurality of filters comprises a heatable foil for heating.

5. The system of claim 4, wherein the controller comprises stored data of the solubility of fluids which serves as set points for heating of the heating elements of the filter or each filter of the plurality of filters.

6. The system of any of claims 1 to 5, wherein a vibrating actuator is attached to the filter or each filter of the plurality of filters.

7. The system of any one of claims 3 to 6, wherein the pressure sensor is connected to the controller for transmitting measured pressures, and wherein the controller is connected to the pump for stopping the fluid flow in case of a measured pressure above a defined threshold.

8. The system of any one of claims 1 to 7, wherein the filter is insulated.

9. A method for moving of a fluid in a fluid path of a fluidic system, comprising the steps of:
- Providing the fluid to the fluidic path;
- Moving the fluid in a defined direction with a pump;
- Sensing the pressure in the fluidic path with a pressure sensor which is arranged downstream of the pump;
- Heating the fluid in the fluidic path in a filter comprising a heating element which is arranged downstream of the pressure senor;
- Providing the filtered fluid downstream of the heatable filter.

10. The method of claim 9, wherein the fluid is heated in the filter by a heatable foil.

11. The method of claim 9 or 10, wherein a temperature sensor of the filter is connected to a controller for measuring the temperature in the filter.

12. The method of claim 11, wherein the heating elements of the filter are connected to the controller for adjusting the filter to a defined temperature depending on the measured temperature in the filter.

13. The method of claim 11, wherein the defined temperature is adjusted to the solubility of the fluid in the fluidic path.

14. The method of claim 11 or 12, wherein the controller comprises a set of data comprising the solubility of fluids and uses the set of data for adjusting the temperature of the filter to the solubility of the fluid present in the fluidic path.

15. The method of any one of claims 9 to 13, comprising the step of stopping the pump which is connected to the controller, when the pressure sensor which is connected to the controller transmits data of a pressure in the fluidic path exceeding or falling below a defined threshold.
